# EUROPÄISCHE PATENTSCHRIFT

(11) **EP 0 363 718 B1**
(45) Veröffentlichungstag und Bekanntmachung des Hinweises auf die Patenterteilung: **27.10.1993**
(21) Anmeldenummer: 89117679.4
(22) Anmeldetag: 25.09.1989
(51) Int. Cl.: C02F 3/30

(54) **Verfahren zur biologischen Abwasserreinigung und die Ausgestaltung spezifischer Anlagenteile**
Process for biological waste water purification, and configuration of particular installation parts
Procédé pour la purification biologique d'eau usée et projet de parties particulières d'installation

(30) Priorität: 29.09.1988 DE 3833009
(43) Veröffentlichungstag der Anmeldung: 18.04.1990
(73) Patentinhaber: Schneider, Norbert, 42781 Haan (DE)
(72) Erfinder: Schneider, Norbert, 42781 Haan (DE)
(74) Vertreter: König, Reimar, Dr.-Ing.

(56) Entgegenhaltungen:
- DE-A- 3 215 404
- DE-A- 3 427 310
- G. Rheinheimer et al.: "STICKSTOFFKREISLAUF IM WASSER", R. Oldenbourg Verlag, München (DE), 1988; Seite 278 - 284, 3.2.1.2.2 "Simultane Denitrifikation, Verfahrensbeschreibung";

## Beschreibung

Die Erfindung betrifft ein Abwasserreinigungsverfahren und eine Vorrichtung zur Durchführung des Verfahrens mit mehreren, an einer biologischen Reinigung gleichzeitig teilnehmenden Becken, die mit einer abschaltbaren Belüftungsvorrichtung und einer davon getrennten Umwälzvorrichtung ausgerüstet sind, einen Zulauf verbunden mit einer Rücklaufschlammzuführung aus einem Klärbehälter aufweisen, wobei der Ablauf in diesen Behälter geführt wird, die biologischen Behandlungsbecken in Reihe geschaltet sind, die Beckenfunktionen nach Ablauf eines jeweils vorgegebenen Schaltzyklus zyklisch vertauscht werden sowie das Becken, in das der Zulauf- und der Rücklaufschlamm geführt werden grundsätzlich anoxisch und das Becken aus dem jeweils der Ablauf erfolgt, grundsätzlich aerob betrieben werden.

Aus der deutschen Patentschrift 23 33 675 sind biologische Abwasserreingigungssysteme bekannt, die ebenfalls aus drei Behältern bestehen. Allerdings dient jeweils ein Behälter zum Abtrennen der Feststoffe (Klärbehälter) und nimmt somit in dieser Funktionsperiode nicht am eigentlichen biologischen Reinigungsprozeß teil. Jedoch sind die dort beschriebenen Umwälz- und Begasungssysteme funktionell nicht voneinander getrennt, was nur eine unvollkommene Erfüllung der verfahrenstechnischen Gesichtspunkte zuläßt.

Wichtigster Nachteil dieses Systems ist jedoch, daß bei allen Betriebsweisen des Zufuhrbehälters erhebliche Einschränkungen in Kauf genommen werden müssen. Wird zum Beispiel der Zufuhrbehälter ausschließlich anaerob betrieben, so gelangt das während dieser Zeit nicht oxydierte Ammonium nach dem nächsten Umschaltzyklus unweigerlich in den Ablauf. Wird zur Vermeidung dieses Nachteils jedoch der Zufuhrbehälter zeitweise anoxisch und zeitweise aerob betrieben, so läßt sich das während der aeroben Phase eingeleitete Substrat nicht für die Denitrifikation nutzbar machen.

Die deutsche Offenlegungsschrift 34 27 310 beinhaltet lediglich eine Erweiterung des in der erwähnten Patentschrift beschriebenen Verfahrens mit zusätzlicher Phosphorelimination, ohne jedoch die geschilderten grundsätzlichen Nachteile auszuräumen.

Bei einem in der deutschen Offenlegungsschrift 32 15 404 beschriebenen Verfahren werden immer drei Becken zyklisch miteinander vertauscht, jedoch nimmt stets ein anaerob betriebenes Becken an dem zyklischen Vertauschen mit teil. Bei einem der beschriebenen Ausführungsbeispiele beginnt das Verfahren grundsätzlich mit einem anaerob betriebenen Becken, an das sich aerob betriebene Becken anschließen. Bei einem anderen Ausführungsbeispiel wird ebenfalls grundsätzlich mit einem anaerob betriebenen Becken begonnen, an das sich ein anoxisch betriebenes und danach ein aerob betriebenes Becken anschließen.

Hieraus ergibt sich, daR sich bei dem ersten Ausführungsbeispiel keine Denitrifikation durchführen läßt, da hierfür eine anoxische Stufe zwingend erforderlich ist, und daß bei dem Verfahren gemäß dem Zweiten Ausführungsbeispiel keine Möglichkeit besteht, die anoxische oder die anaerobe Stufe wahlweise über einen längeren Zeitraum mittels einer Pufferstufe zu betreiben.

Des weiteren ergeben sich aufgrund der Teilnahme der anaeroben Behandlungsstufe am zyklischen Wechsel der drei Behälter verschiedene Nachteile für die Abwasserbehandlung. Ein Milieuwechsel von aerob zu anaerob erweist sich nämlich als nachteilig für die Prozeßtechnik, da der Zeitraum für den Milieuwechsel zeitlich nicht definierbar ist und sich somit keine definierten Aufenthaltszeiten zuordnen lassen. Ein weiterer Nachteil ist, daß durch Störungen während der Denitrifikation im anoxischen Milieu Nitrat auch in die anaerobe Phase verschleppt werden kann, was zu einer Hemmung der Phosphatrücklösung und damit zu einer Störung der Phosphatelimination führen kann. Nachteilig ist des weiteren, daß Gummimembranen, die in der abschaltbaren Belüftungstechnik überwiegend eingesetzt werden, im anaeroben Milieu nicht ausreichend beständig sind.

Der Erfindung liegt daher die Aufgabe zugrunde, ein biologisches Reinigungsverfahren so zu optimieren, daß sich so wenig Ammonium wie möglich im Ablauf befindet und die Verfügbarkeit der abbaubaren organischen Inhaltsstoffe des Abwassers für die Denitrifikation optimal ist.

Erfindungsgemäß wird diese Aufgabe dadurch gelöst, daß zwischen dem Becken, in das der Zulauf erfolgt, und dem Becken, aus dem der Ablauf erfolgt, ein weiteres an dem zyklischen Tausch teilnehmendes Becken angeordnet ist, das in der Regel aerob und in Ausnahmefällen anoxisch betrieben wird.

In der Behandlungsstufe in die jeweils das Abwasser zuläuft, wird grundsätzlich nur gerührt und die Begasungsorgane sind abgeschaltet. Bei diesen Betriebsbedingungen sind optimale Voraussetzungen für eine gezielte Denitrifikation unter höchstmöglicher Ausnutzung des zugeführten Substrates gegeben.

Die jeweils mittlere Behandlungsstufe wird normalerweise immer mit Sauerstoff versorgt. Allerdings ist in bestimmten Situationen auch ein Zeitsharing vorteilhaft, d.h. ein Teil der Behandlungszeit wird anoxisch und ein Teil der Behandlungszeit aerob genutzt.

Die letzte Behandlungsstufe wird grundsätzlich aerob gefahren, um zu vermeiden, daß das giftige Ammonium auch in kleinen Mengen in den Abfluß gelangt.

Das erfindungsgemäße Verfahren zur biologischen Abwasserreinigung mit weitgehender Stickstoffentfernung ist auch bestens geeignet, mit zusätzlichen Verfahrenskomponenten kombiniert zu werden.

Durch Vorschalten eines anaeroben Beckens, das an der erfindungsgemäßen Verteilschaltfolge nicht teilnimmt und somit immer anaerob betrieben wird, läßt sich zusätzlich auf biologischem Wege Phosphor aus dem System entfernen. Da das weitestgehende Entfernen des Nitratsauerstoffs Voraussetzung für die biologische Phosphorelimination ist, rückt diese Verfahrenskombination besonders in den Vordergrund.

In besonderen Anwendungsfällen, insbesondere für hochverschmutzte, meist industrielle Abwässer, ist auch eine zweistufige Verfahrenskombination möglich. Den bereits geschilderten Verfahrenstufen, kann mit oder auch ohne die anaerobe Behandlungsstufe für die gezielte Phosphorelimination, eine biologische Hochlaststufe vorgeschaltet werden. Diese Hochlaststufe kann sowohl eine Hochlastbelebungsanlage als auch einen Hochlasttropfkörper beinhalten. Auch läßt sich die Hochlaststufe als anaerobe Reinigungsstufe ausbilden.

Um hochverschmutzte, nur in einem kurzen saisonalen Zeitraum anfallende Abwässer nicht sofort in einer groß dimensionierten Reinigungsanlage bis zu den geforderten Grenzwerten behandeln zu müssen, kann zunächst eine Vorbehandlung in der biologischen Hochlaststufe erfolgen, um das vorbehandelte und dadurch nicht mehr zu weiteren Umweltbeinträchtigungen führende Abwasser in einem Behälterbauwerk zwischenzulagern. Das so vorbehandelte Abwasser wird dann der zweiten, erfindungsgemäßen Behandlungsstufe dosiert über das Jahr verteilt zugeführt.

Bei kombinierten Reinigungssystemen für industrielle und kommunale Abwässer erscheint es sinnvoll, die Vorbehandlung nur für das industrielle Abwasser vorzunehmen, um dann mit oder ohne Zwischenspeichern die gemeinsame Weiterbehandlung zusammen mit dem kommunalen Abwasser durchzuführen.

Da die biochemischen Reaktionsprozesse bei der Abwasserreinigung sehr stark temperaturabhängig sind und die Reaktionsgeschwindigkeiten bei abnehmender Temperatur überproportional zurückgehen, kann es erforderlich sein, alle oder einzelne Reaktionsbehälter mit einem Wärmeschutz, gegebenenfalls auch mit einer Abdeckung, zu versehen.

Bei biologischen Abwasserreinigungsanlagen, insbesondere bei größeren Anlagen ist es schwierig und wenig sinnvoll, die erforderlichen Schieber und Rohrleitungen, in herkömmlicher Weise anzuordnen. Besser erscheint die konzentrierte Anordnung der für die Prozeßsteuerung erforderlichen Absperrorgane in einem kompakten Sammel- und Verteilersystem, das sich sowohl als Rohrleitungssystem, als Betonbauwerk oder als Metallkonstruktion ausbilden läßt. Ein solches System kann im wesentlichen aus sechs einzelnen Kammern oder Rohrabschnitten mit Einbindung der verschiedenen Rohrleitungen oder Gerinnen und insgesamt neun Absperrorganen sowie den zu- bzw. Ablaufrohren oder -gerinnen bestehen. Bei einer solchen kompakten und übersichtlichen Anordnung läßt sich die Automatisierung der erforderlichen Schieber überaus preisgünstig durch hydraulische oder pneumatische Stellzylinder bewerkstelligen.

Die Erfindung wird nachstehend anhand von fünf Verfahrensskizzen sowie eines Ausführungsbeispiel für ein kompaktes Sammel- und Verteilersystem näher erläutert.

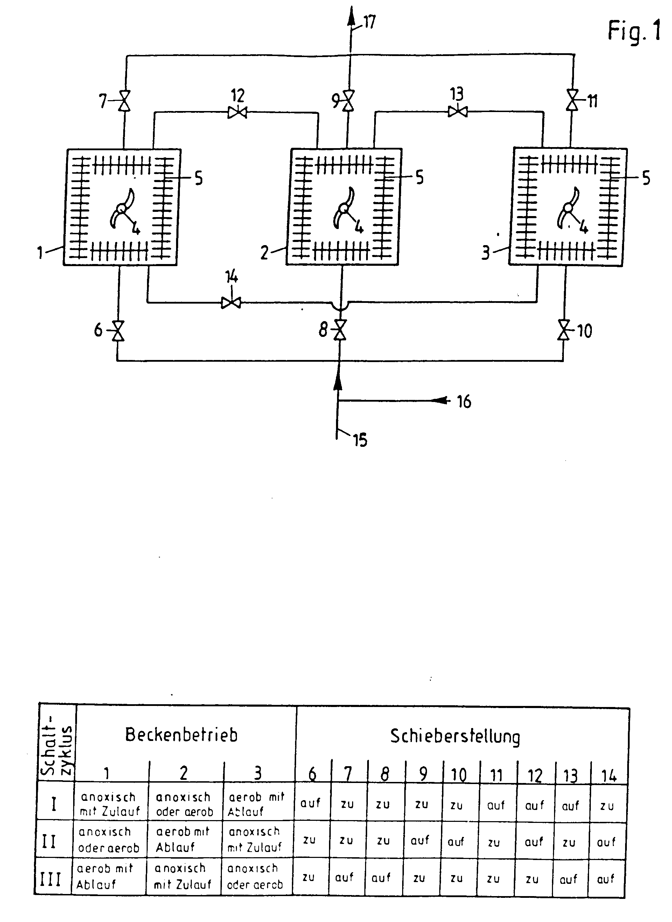

In Figur 1 ist ein Verfahrensschema zur biologischen Abwasserreinigung dargestellt. Das Abwasser 15 wird zusammen mit dem Rücklaufschlamm 16, der aus einem nicht dargestellten Nachklärbecken zurückgeführt wird, im zeitlichen Wechsel über die Schieber 6, 8 und 10 den biologischen Behandlungsstufen 1, 2 oder 3 zugeführt. Jede der biologischen Behandlungsstufen ist mit einem abschaltbaren Belüfter 5 und einem davon unabhängig arbeitenden Umwälzaggregat 4 ausgestattet.

Beim Schaltzyklus I. gemäß dem Schaltschema der Fig. 1 fließen Zulauf 15 und Rücklaufschlamm 16 über den Schieber 6 in das Becken 1. In diesem Becken 1 ist zu diesem Zeitpunkt nur das Rührwerk 4 in Betrieb, so daß sich anoxische Betriebsbedingungen einstellen, was unter Ausnutzung des vorhandenen Nitratsauerstoffes und des zugeführten Substrates zu biologischen Denitrifikation führt. Über den Schieber 12 verläßt das so behandelte Zulauf- 15 und Rücklaufschlammgemisch 16 das Becken 1 und gelangt in das Becken 2. Im Becken 2 ist bei Normalbetrieb die Begasung 5 und, falls erforderlich, das Rührwerk 4 in Betrieb, so daß dort sowohl das vorhandene Ammonium als auch organische Schmutzstoffe oxydiert und abgebaut werden.

In besonderen Anwendungfällen findet im Behälter 2 ein sogenanntes Zeitsharing statt, d.h. im ersten Teil des Schaltzyklus wird der Behälter 2 durch Abschalten der Begasung 5 und Einschalten des Rührwerks 4 noch für eine Zeitlang anoxisch betrieben, bevor für die restliche Zeit des betreffenden Schaltzyklus die Begasung zugeschaltet wird und dadurch aerobe Bedingungen aufrechterhalten werden.

Über den Schieber 13 gelangt das Zulauf- 15 und das Rücklaufschlammgemisch 16 anschließend in den Behälter 3, der nach dem Einschalten der Begasungsvorrichtung 5 und, falls erforderlich, des Rührwerks 4 aeroben Bedingungen unterliegt. Über den geöffneten Schieber 11 gelangt das so behandelte Abwasser nun zum Ablauf 17.

Alle anderen bisher nicht erwähnten Schieber 7 bis 10 und 14 sind während dieses Schaltzyklus geschlossen.

Im nachfolgenden Schaltzyklus II übernimmt der Behälter 3 die Funktion des Behälters 1 aus dem vorangegangenen Schaltzyklus. Gleichzeitig gehen die verfahrenstechnischen Funktionen vom Behälter 2 auf den Behälter 1 und vom Behälter 3 auf den Behälter 2 über.

Beim Schaltzyklus III findet ein abermaliger Wechsel der Verfahrensfunktionen für die einzelnen Behälter statt. Gegenüber dem vorangegangenen Programmablauf übernimmt jetzt der Behälter 2 die Funktion des Behälters 3, der Behälter 1 die Funktion des Behälters 2 und der Behälter 3 die Funktion des Behälters 1.

Die für die verschiedenen Schaltzyklen erforderlichen Schieberstellungen sind tabellarisch dargestellt.

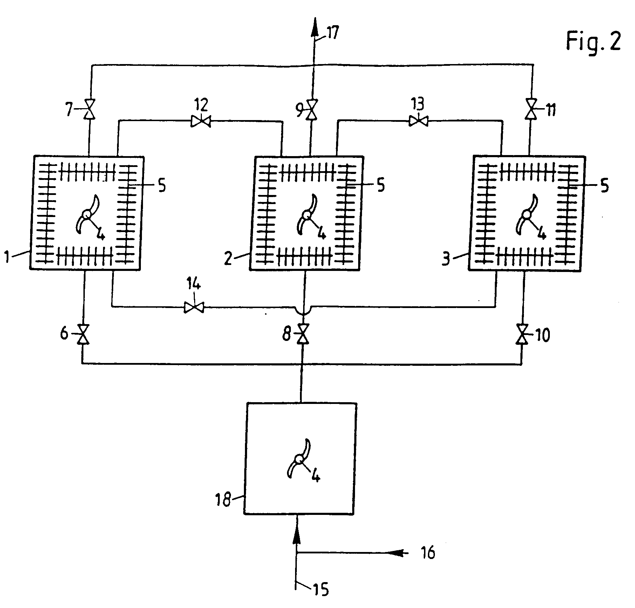

In Figur 2 ist das vorstehend beschriebene Verfahren zusätzlich um einen vorgeschalteten Anaerobreaktor 18 ergänzt. In diesen Anerobreaktor 18 wird der Zulauf 15 zusammen mit dem Rücklaufschlamm 16 eingeleitet. Die Durchmischen des Reaktorinhaltes erfolgt mit einem Rührwerk 4.

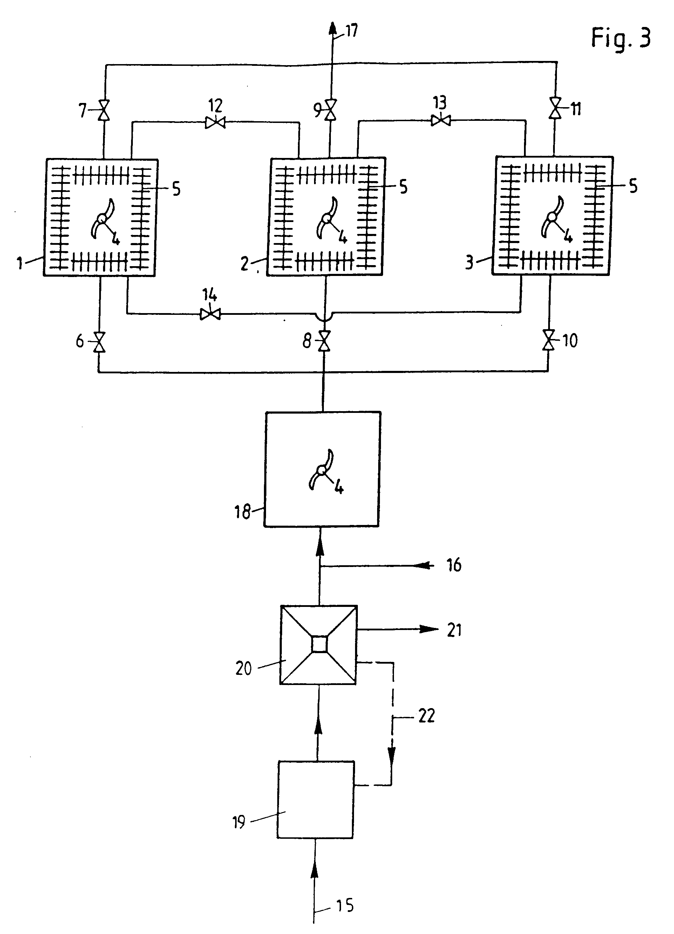

In Figur 3 ist das vorstehend erläuterte Verfahren durch eine zusätzlich vorgeschaltete Hochlastreinigungsstufe ergänzt, in die der Zulauf 15 eingeleitet wird. Der bei diesem Reinigungsprozeß entstehende Schlamm kann bei Bedarf in einer Zwischenklärung 20 abgetrennt und gegebenenfalls als Überschußschlamm 21 dem System entnommen werden. Auch kann ein Teil oder der gesamte in der Zwischenklärung 20 angefallene Schlamm als Rücklaufschlamm 22 wieder in das Hochlastbecken 19 eingeleitet werden.

Die biologische Hochlastreinigungsstufe 19 kann sowohl aerob als Belebungsbecken oder Festbettreaktor oder auch anaerob betrieben werden. Während der Zulauf 15 der nun vorgeschalteten Hochlastreinigungsstufe 19 zugeführt wird, wird der Rücklaufschlamm 16 weiterhin in den Anaerobreaktor 18 oder - soweit dieser nicht vorhanden ist - in das erfindungsgemäße Reinigungssystem gespeist.

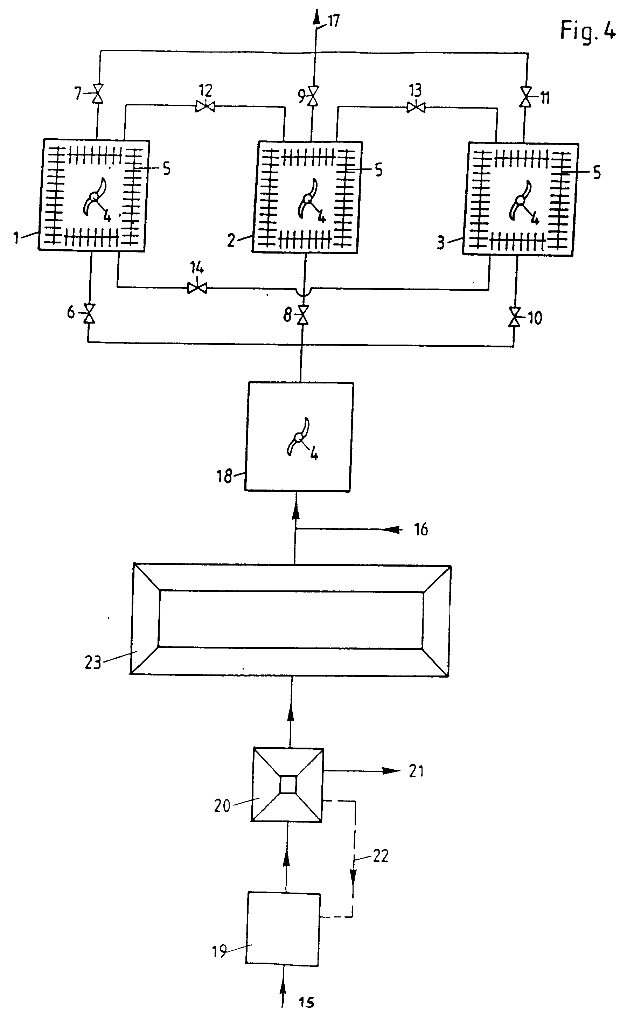

Gemäß Figur 4 ist in das Verfahren noch ein Zwischenspeicher 23 eingefügt. In diesem Zwischenspeicher 23 wird das vorgereinigte Abwasser aus der Hochlaststufe 19, gegebenenfalls kombiniert mit einer Zwischenklärung 20, insbesondere bei periodisch oder saisonal schwankendem Abwasserzulauf zwischengespeichert, um dann dosiert dem nachfolgenden Reinigungssystem zugeführt zu werden.

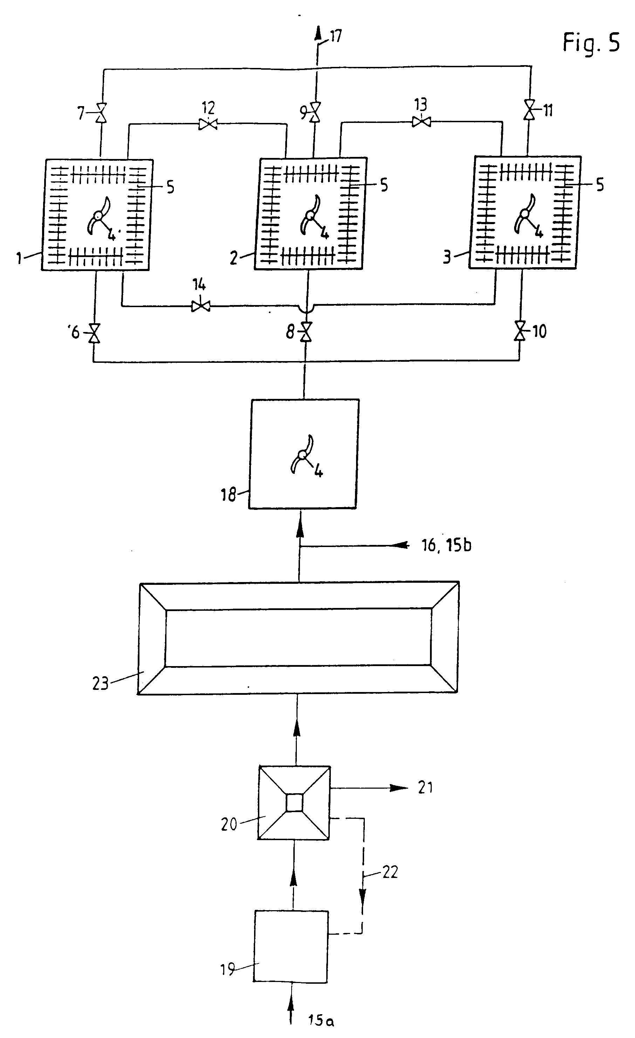

Bei den Verfahren nach Figur 5 werden zwei verschiedene Abwasserzuläufe 15 gereinigt.

Ein Industrieabwasserzulauf 15a wird - wie oben beschrieben - in einer Hochlaststufe 19 vorbehandelt und gelangt dann, je nach Bedarf, mit oder ohne Aufenthalt in einem Zwischenspeicher 23 in das nachfolgende Reinigungssystem gemäß Figur 1 oder 2. Erst dort wird zusammen mit dem Rücklaufschlamm 16 der kommunale Abwasseranteil 15b zugefügt.

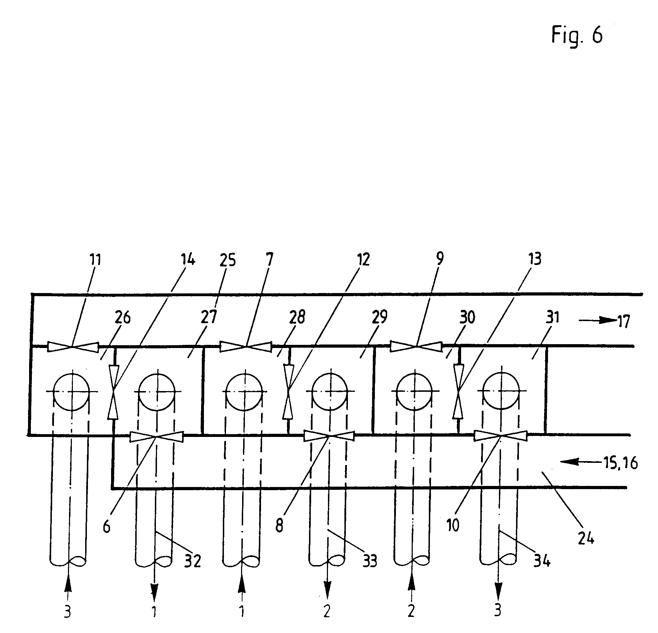

In Figur 6 ist eine bauliche Ausgestaltung eines Sammel- und Verteilersystems dargestellt. Es wurde dabei eine gestreckte Bauform, d.h. eine Reihenanordnung der einzelnen Kammern gewählt.

Denkbar ist auch eine Ausführung der sechs Schieberkammern in zwei Dreierreihen oder in ringförmiger Bauweise.

Anstelle von baulich ausgestalteten Sammel- und Verteilersystemen kann auch ein äquivalentes geschlossenes Rohrsystem Verwendung finden.

Das System besteht im wesentlichen aus einem Zulaufgerinne 24, in dem der Zulauf 15 und der Rücklaufschlamm 16 eingeleitet werden und einem Ablaufgerinne 25, aus dem der Ablauf 17 entnommen wird.

Zwischen den beiden Gerinnen sind sechs Schieberkammern 26 bis 31 nebeneinander angeordnet. Vom Zulaufgerinne 24 werden der Zulauf 15 und der Rücklaufschlamm 16 zyklisch über die Schieber 6, 8 oder 10 und Rohrleitungen oder Gerinne 32, 33, 34 den Becken 1, 2, 3 zugeführt.

Der Ablauf 17 über das Ablaufgerinne 25, wird je nach dem, welches Becken in letzter Rangfolge steht, durch die Schieber 7, 9 oder 11 herbeigeführt, während die Reihenschaltung des im Verfahrensablauf jeweils in der Mitte liegenden Beckens durch die jeweils zwei Kammern 26, 27; 28, 29 oder 30, 31 verbindenen Schieber 14, 12 oder 13 bewirkt wird.

## Patentansprüche

1. Abwasserreinigungsverfahren mit mehreren an einer biologischen Reinigung gleichzeitig teilnehmenden Becken (1, 2, 3), die mit einer abschaltbaren Belüftungsvorrichtung (5) und einer davon getrennten Umwälzvorrichtung (4) ausgerüstet sind, einen Zulauf (15) verbunden mit einer Rücklaufschlammzuführung (16) aus einem Klärbehälter aufweisen, wobei der Ablauf (17) in diesen Klärbehälter geführt wird, die biologischen Behandlungsbecken in Reihe geschaltet sind und die Beckenfunktionen nach Ablauf eines jeweils vorgegebenen Schaltzyklus zyklisch vertauscht werden sowie das Becken, in das der Zulauf und der Rücklaufschlamm geführt werden, grundsätzlich anoxisch und das Becken, aus dem jeweils der Ablauf erfolgt, grundsätzlich aerob betrieben werden, dadurch gekennzeichnet, daß zwischen dem Becken, in das der Zulauf erfolgt, und dem Becken, aus dem der Ablauf erfolgt, ein weiteres, an dem zyklischen Tausch teilnehmendes Becken angeordnet ist, das in der Regel aerob und in Ausnahmefällen anoxisch betrieben wird.

2. Verfahren nach Anspruch 1, dadurch gekennzeichnet, daß anstelle der vorgegebenen Zeit für das Umschalten auf den nächsten Zyklus, die Nitratkonzentration in einem der drei Becken oder im Ablauf als Steuergröße herangezogen wird.

3. Verfahren nach Anspruch 1, dadurch gekennzeichnet, daß anstelle der vorgegebenen Zeit die Ammoniumkonzentration in einem der drei Becken als Steuergröße herangezogen wird.

4. Verfahren nach einem oder mehreren der Ansprüche 1 bis 3, dadurch gekennzeichnet, daß dem System ein Anaerobreaktor vorgeschaltet ist, in den der Zulauf und der Rücklaufschlamm eingeleitet werden.

5. Verfahren nach einem oder mehreren der Ansprüche 1 bis 4, dadurch gekennzeichnet, daß dem System eine getrennte Hochlastreinigungsstufe vorgeschaltet wird.

6. Verfahren nach einem oder mehreren der Ansprüche 1 bis 5, dadurch gekennzeichnet, daß zwischen der Hochlastreinigungsstufe und dem nachfolgenden Reinigungssystem ein Zwischenspeicher für das vorgereinigte Abwasser vorgeschaltet ist.

7. Verfahren nach einem oder mehreren der Ansprüche 1 bis 6, dadurch gekennzeichnet, daß in der Hochlastreinigungsstufe getrennt gesammeltes Industrieabwasser vorgereinigt wird und dieses mit oder ohne Benutzung eines Zwischenspeichers zusammen mit Rücklaufschlamm und Zulauf aus einem kommunalen Abwassernetz weiterbehandelt wird.

8. Verfahren nach einem oder mehreren der Ansprüche 1 bis 7, dadurch gekennzeichnet, daß zumindest einzelne Behälter der verschiedenen biologischen Behandlungsstufen mit einem Wärmeschutz ausgerüstet sind.

9. Vorrichtung zur Durchführung des Verfahrens nach den Ansprüchen 1 bis 8, gekennzeichnet durch eine Rohrleitung oder ein Gerinne (24) für den Zulauf (15) und den Rücklaufschlamm (16), eine Rohrleitung oder ein Gerinne (25) für den Ablauf (17), drei Schieberkammern (27,29,31), die über die Zuleitungen oder Gerinne (32,33,34) zu den einzelnen Becken (1,2,3) führen sowie drei Schieberkammern (26,28,30), die mit den Ablaufleitungen von den einzelnen Becken in Verbindung stehen, wobei jeweils die Schieberkammer (26,28,30) (Entnahme) für ein Becken und die Schieberkammer (27,29,31) (Beschickung) für das in der Durchflußreihenfolge nächste Becken nebeneinander angeordnet und miteinander durch automatisch betätigte Absperrorgane (14,12,13) verbunden sind.

10. Vorrichtung nach Anspruch 9, gekennzeichnet durch hydraulische oder pneumatische Antriebe der Absperrorgane.

## Claims

1. Waste water purification process comprising a plurality of tanks (1, 2, 3) participating simultaneously in a biological purification, which are equipped with a disconnectible aeration device (5) and a circulating device (4) separate therefrom and have an intake (15) connected to a return sludge supply (16) from a clarifier, wherein the discharge (17) is led into this clarifier, the biological treatment tanks are connected in series and the tank functions are cyclically interchanged on completion of a respectively predetermined switching cycle, and wherein the tank into which the intake and the return sludge are led is operated basically anoxically while the tank from which the discharge is taking place at the time is operated basically aerobically, characterised in that between the tank into which the intake flows and the tank from which the discharge occurs there is interposed a further tank that participates in the cyclical interchange and is operated as a rule aerobically but in exceptional cases anoxically.

2. Process according to claim 1, characterized in that instead of the predetermined time for changing over to the next cycle, the nitrate concentration in one of the three tanks or in the discharge is employed as control variable.

3. Process according to claim 1, characterized in that instead of the predetermined time the ammonium concentration in one of the three tanks is employed as control variable.

4. Process according to one or more of claims 1 to 3, characterised in that an anaerobic reactor into which the intake and the return sludge are introduced is connected in series ahead of the system.

5. Process according to one or more of claims 1 to 4, characterised in that a separate heavy-load purification stage is connected ahead of the system.

6. Process according to one or more of claims 1 to 5, characterised in that between the heavy-load purification stage and the following purification system an intermediate reservoir for the prepurified waste water is connected in series.

7. Process according to one or more of claim 1 to 6, characterised in that in the heavy-load purification stage separately collected industrial waste water is prepurified and that this is further treated, with or without the use of an intermediate reservoir, together with return sludge and intake from a municipal waste water collecting system.

8. Process according to one or more of claims 1 to 7, characterised in that at least individual containers of the various biological treatment stages are equipped with thermal insulation.

9. Apparatus for carrying out the process according to any of claims 1 to 8, characterised by a pipeline or a gully (24) for the intake (15) and the return sludge (16), a pipeline or a gully (25) for the discharge (17), three valve chambers (27, 29, 31) that lead via the pipelines or gullies (32, 33, 34) to the individual tanks (1, 2, 3) and three valve chambers (26, 28, 30) that are connected to the discharge lines from the individual tanks, the respective valve chambers (26, 28, 30) (removal) for one tank and the valve chambers (27, 29, 31) (feed) for the next tank in the throughflow series are arranged side by side and are connected together by automatically actuated shut-off devices (14, 12, 13).

10. Apparatus according to claim 9, characterised by hydraulic or pneumatic drives for the shut-off devices.

## Revendications

1. Procédé pour l'épuration d'eaux résiduaires comportant plusieurs bassins (1, 2, 3) qui participent simultanément à une épuration biologique et qui sont équipés d'un dispositif d'aération (5) pouvant être interrompu et d'un dispositif de mise en circulation (4) séparé dudit dispositif d'aération, qui présentent une alimentation (15) reliée à une alimentation de boues de recyclage (16) provenant d'un bassin filtrant dans lequel est amené la décharge (17), les bassins de traitement biologique étant reliés en série et les fonctions des bassins étant permutées cycliquement à la fin d'un cycle de connexion défini au préalable, le bassin dans lequel sont amenées l'alimentation et les boues de recyclage fonctionnant de manière essentiellement anoxique, le bassin duquel part la décharge fonctionnant de manière essentiellement aérobie, caractérisé en ce qu'on dispose entre le bassin dans lequel arrive l'alimentation et le bassin duquel part la décharge un autre bassin qui participe à la permutation cyclique et qui fonctionne en général de manière aérobie et exceptionnellement de manière anoxique.

2. Procédé selon la revendication 1, caractérisé en ce qu'on prend en considération comme valeur d'influence la concentration en nitrate dans un des trois bassins ou dans la décharge au lieu du temps prédéfini pour le passage au cycle suivant.

3. Procédé selon la revendication 1, caractérisé en ce qu'on prend en considération comme valeur d'influence la concentration en ammonium dans un des trois bassins au lieu du temps prédéfini.

4. Procédé selon une quelconque des revendications 1 à 3, caractérisé en ce qu'on dispose avant le système un réacteur fonctionnant de manière aérobie dans lequel sont introduites l'alimentation et les boues de recyclage.

5. Procédé selon une quelconque des revendications 1 à 4, caractérisé en ce qu'on dispose avant le système une étape d'épuration à charge élevée.

6. Procédé selon une quelconque des revendications 1 à 5, caractérisé en ce qu'on dispose entre l'étape d'épuration à charge élevée et le système d'épuration consécutif un réservoir intermédiaire pour l'eau résiduaire épurée au préalable.

7. Procédé selon une quelconque des revendications 1 à 6, caractérisé en ce qu'on épure séparément au préalable dans l'étape d'épuration à charge élevée les eaux résiduaires industrielles rassemblées et en ce qu'on traite celles-ci ultérieurement, en utilisant ou en n'utilisant pas de réservoir intermédiaire, simultanément avec les boues de recyclage et l'alimentation provenant d'un réseau d'eaux résiduaires communales.

8. Procédé selon une quelconque des revendications 1 à 7, caractérisé en ce qu'au moins un récipient des différentes étapes de traitement biologique est équipé d'une protection thermique.

9. Dispositif pour la réalisation du procédé selon les revendications 1 à 8, caractérisé par un tuyau ou une conduite (24) pour l'alimentation (15) et les boues de recyclage (16), par un tuyau ou une conduite (25) pour la décharge (17), par trois sas de vannes (27, 29, 31) qui conduisent via les tuyaux ou conduites (32, 33, 34) aux différents bassins (1, 2, 3) ainsi que par trois sas de vannes (26, 28, 30) qui sont reliés aux tuyaux de décharge des différents bassins, le sas de vanne (26, 28, 30) (évacuation) d'un bassin et le sas de vanne (27, 29, 31) (alimentation) pour le bassin suivant dans l'ordre de l'écoulement étant disposés l'une à côté de l'autre et étant reliées l'une à l'autre par des organes d'arrêt (14, 12, 13) qui sont actionnés automatiquement.

10. Dispositif selon la revendication 9, caractérisé par un entraînement hydraulique ou pneumatique des organes d'arrêt.
